# EUROPEAN PATENT APPLICATION

(11) **EP 3 437 937 A1**
(43) Date of publication of application: **06.02.2019**
(21) Application number: 17774219.4
(22) Date of filing: 10.03.2017
(51) Int. Cl.: B60R 21/00, B60R 19/48, B60R 21/0136, B60R 21/34

(54) **PEDESTRIAN COLLISION DETECTION DEVICE**

(30) Priority: 30.03.2016 JP 2016068293
(71) Applicant: Mitsubishi Jidosha Kogyo Kabushiki Kaisha, Tokyo 108-8410 (JP)
(72) Inventor: NAKAMURA, Shinya, Tokyo 108-8410 (JP); FUJISAWA, Naoki, Tokyo 108-8410 (JP); OGATA, Fumihiro, Tokyo 108-8410 (JP); OHMA, Syunichiro, Tokyo 108-8410 (JP); ISHIYAMA, Yasuki, Tokyo 108-8410 (JP); MASUDA, Hiroto, Tokyo 108-8410 (JP); INAGAKI, Tomohiro, Tokyo 108-8410 (JP); KAWAMATA, Toru, Tokyo 108-8410 (JP)
(74) Representative: Vossius & Partner Patentanwälte Rechtsanwälte mbB
(86) International application number: PCT/JP2017/009850
(87) International publication number: WO 2017/169675

(57) **Abstract**

A pedestrian collision detection device (1) is mounted on a front bumper (11) of a vehicle (C), and is provided with a sensor member (20) (a tube (21), a buffer member (22), a pressure sensor (23)) that detects shock which is received by the vehicle (C) when the vehicle (C) collides with a pedestrian, and a support member (24) that supports the sensor member (20) on a vehicle body side of the vehicle (C). The front bumper (11) includes a bumper beam (12) arranged between a pair of side members (5). The tube (21) covered with the buffer member (22) is arranged at the front portion of the support member (24) (a bumper reinforcement (13), an extension portion (26), a stay (29)) such that a lower portion (22a) of the buffer member (22) is positioned above an upper portion (12a) of the bumper beam (12) and a front portion (22b) of the buffer member (22) is positioned behind a front portion (12b) of the bumper beam (12).

## Description

### Technical Field

Embodiments described herein relate generally to a pedestrian collision detection device installed in a vehicle.

### Background Art

Vehicles comprising a pedestrian protection device such as an active hood (pop-up hood) and a hood airbag to reduce shocks given to a pedestrian when colliding with a pedestrian are known. To appropriately operate these pedestrian protection devices at the time of collision between the vehicle and the pedestrian, the collision between the vehicle and the pedestrian needs to be detected (discriminated) accurately.

For example, Patent Literature 1 and Patent Literature 2 disclose a pedestrian collision detection device for a vehicle comprising a sensor member for detecting a collision with a pedestrian. In such a pedestrian collision detection device, the sensor member is configured to comprise a flexible tube such as resin and a pressure sensor for detecting a variation in an internal pressure of the tube. The tube is disposed on the front side of the vehicle and extends in the vehicle width direction. More specifically, a front surface of a frame member (bumper beam) of a front bumper bridged between a pair of side members is considered as a seat surface, and a tube is disposed along the front surface. The pressure sensor is connected to both ends of the tube, respectively. For this reason, when the vehicle collides with a pedestrian, the tube is elastically deformed and collapses due to the shock of the collision, causing a variation in the internal pressure of the tube (specifically, the inside air pressure rises). The pedestrian collision detection device detects the collision of the vehicle with the pedestrian by recognizing the internal pressure variation caused due to the elastic deformation of the tube by the pressure sensor.

### Citation List

### Patent Literature

Patent Literature 1: JP 2014-505629 A
Patent Literature 2: JP 2015-131540 A

### Summary of Invention

### Technical Problem

In a general vehicle, however, the bumper beam is located near the height of the pedestrian's knee. For this reason, if the vehicle collides with not only a pedestrian, but also an object at a height substantially equivalent to the knee length of a pedestrian, for example, a small animal such as a dog, a cat, or a raccoon, a pole installed on a road, or the like, at a predetermined speed (approximately 20 km per hour to about 60 km per hour), the tube may be elastically deformed and the internal pressure may be varied. In this case, although the collision is not an interpersonal collision, it is detected as an interpersonal collision by the pressure sensor and the pedestrian protection device may operate.

Therefore, a pedestrian collision detection device which improves accuracy of detecting the collision between a vehicle and a pedestrian and enables a pedestrian protection device to be operated more appropriately is required.

### Solution to Problem

A pedestrian collision detection device according to the present invention comprises a sensor member for detecting a collision received by a vehicle at the time of collision with a pedestrian and a support member for supporting the sensor member on the vehicle body side of the vehicle, and is mounted on a vehicle comprising a front bumper on the front side. The front bumper comprises a bumper beam disposed between a pair of side members. The sensor member is positioned above the bumper beam and behind the bumper beam and is supported by the support member.

For example, the sensor member is configured to comprise a tube having a flexibility and extending in the vehicle width direction, a buffer member covering the tube and extending in the vehicle width direction, and deformed at the time of a collision to press the tube, and a pressure sensor for detecting the variation in the internal pressure of the tube. The support member is provided to extend in the vehicle width direction. The tube covered with the buffer member is disposed on a front portion of the support member such that a lower portion of the buffer member is positioned above the upper portion of the bumper beam and a front portion of the buffer member is located behind a front portion of the bumper beam.

The support member can be configured to include a first support member for supporting the tube between a pair of headlamps and a second support member for supporting the tube on the outer side of the vehicle than both ends of the first support member.

For example, the first support member may be a bumper reinforcement which supports the front bumper on the vehicle body side of the vehicle.

In addition, the second support member may be configured to include an extension portion of the bumper reinforcement extending to the outer side of the vehicle than both ends of the bumper reinforcement. In addition, the second support member may be configured to include a stay of a headlamp provided under each of the pair of headlamps.

In the pedestrian collision detection device, the pressure sensor may be disposed on at least one end of the tube.

### Advantageous Effects of Invention

The pedestrian collision detection device of the present invention can prevent detection of considering a collision with a small animal other than a pedestrian as an interpersonal collision, and can improve the accuracy of detection of the collision between the vehicle and the pedestrian. Thus, for example, a pedestrian protection device such as an active hood (pop-up hood) or a hood airbag can be properly operated at the time of the collision between the vehicle and the pedestrian.

### Brief Description of Drawings

FIG. 1 is a perspective view showing an appearance of a front portion of a vehicle on which a pedestrian collision detection device according to a first embodiment of the present invention is mounted.
FIG. 2 is a perspective view showing a skeleton structure of the front portion of the vehicle on which the pedestrian collision detection device according to the first embodiment of the present invention is mounted.
FIG. 3 is a view showing a longitudinal cross section of a front bumper and its vicinity according to the first embodiment of the present invention, seen from a vehicle width direction.
FIG. 4 is a perspective view showing a configuration of a support member according to the first embodiment of the present invention.
FIG. 5 is a perspective view showing an internal structure of the front portion of the vehicle according to the first embodiment of the present invention.
FIG. 6 is a perspective view showing a configuration of a headlamp according to a second embodiment of the present invention.
FIG. 7 is a longitudinal sectional view showing a support mode of a pressure sensing unit (tube and buffer member) according to the second embodiment of the present invention.

### Mode for Carrying Out the Invention

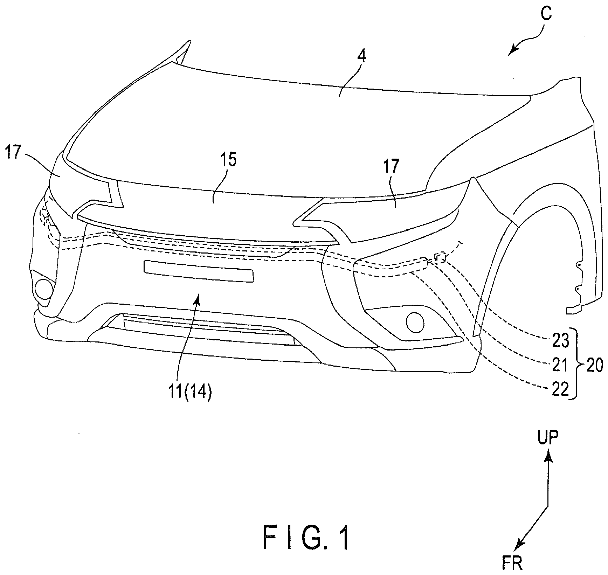

A pedestrian collision detecting apparatus according to embodiments of the present invention will be described hereinafter with reference to FIG. 1 to FIG. 7. The pedestrian collision detection device is mounted on a vehicle having a front bumper on the front side, and detects a collision between the vehicle and a pedestrian. The vehicle may be a passenger car for private use, or a business vehicle such as a truck or a bus, and its use and vehicle type are not particularly limited.

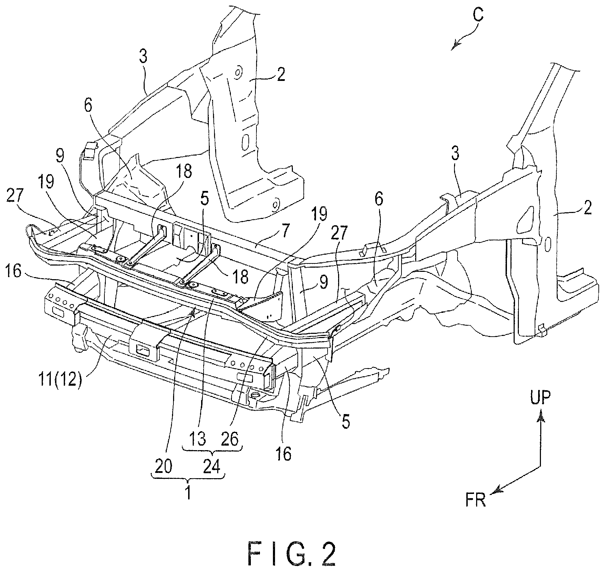

FIG. 1 and FIG. 2 show a schematic configuration of a front portion of a vehicle C on which a pedestrian collision detection device 1 according to the first embodiment is mounted. FIG. 1 is a perspective view of the front portion of the vehicle seen from the upper left side of the vehicle C and FIG. 2 is a perspective view of a skeleton structure of the front portion of the vehicle seen from the upper left side of the vehicle C. In FIG. 1 and FIG. 2, the direction of arrow FR in each figure is defined as the front portion (front side) of the vehicle C, and the direction of arrow UP is defined as the upper portion (upper side) of the vehicle C, respectively. In addition, a direction orthogonal to the arrow directions is defined as a vehicle width direction (left-right direction), a direction toward the center of the vehicle C along the vehicle width direction is defined as inward (inside), and a direction of being remote from the center is defined as outward (outside), respectively.

As shown in FIG. 1 and FIG. 2, an upper frame 3 is coupled to a front pillar 2 of the vehicle C in pairs in a direction toward the front of the vehicle C. The upper frame 3 is disposed along a hood 4 in front of the passenger compartment. Side members 5 are disposed in pairs inside the front pillar 2 and below the upper frame 3. The side members 5 extend from a dash panel (not shown) which partitions the passenger compartment and a hood room (i.e., a region of the front portion of the vehicle having an upper portion covered with the hood 4) toward the front of the vehicle C.

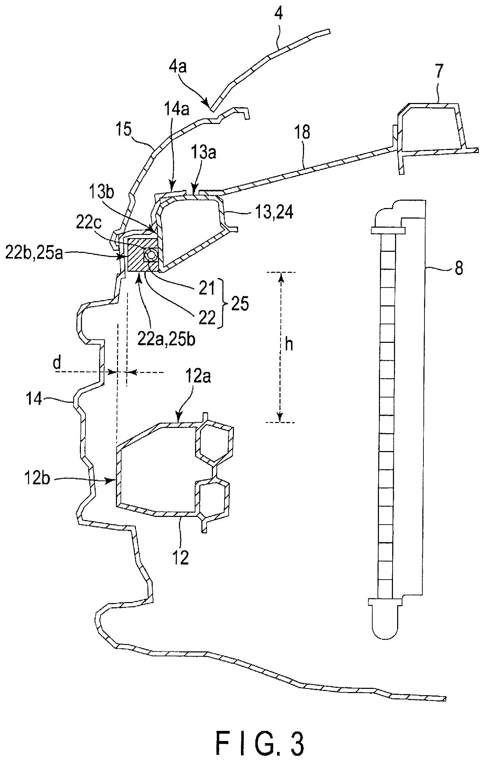

A radiator support 7 is bridged between the front end portions of the pair of upper frames 3. The radiator support 7 is coupled to the side members 5 by a pair of leg portions 9 provided at both end portions, and supports the radiator 8 (see FIG. 3).

A radiator support 7 is bridged between the front end portions of the pair of upper frames 3. The radiator support 7 is coupled to the side members 5 by a pair of leg portions 9 provided at both end portions, and supports the radiator 8 (see FIG. 3).

FIG. 3 is a view of the longitudinal cross section of a front bumper 11 and its vicinity as seen from the vehicle width direction. As shown in FIG. 1 to FIG. 3, the front bumper 11 is configured to comprise a bumper beam 12, a bumper reinforcement 13, and a bumper fascia 14.

Each of the bumper beam 12 and the bumper reinforcement 13 is a framework member of the front bumper 11 formed of a metal material such as iron or aluminum. In the present embodiment, for example, each of the bumper beam 12 and the bumper reinforcement 13 is formed in a shape of a substantially rectangular tube having a hollow interior.

The bumper beam 12 extends in the vehicle width direction between the front end portions of the pair of side members 5, and has both ends connected to the front end portions of the side members 5. A crash box 16 is provided at the front end portion of the side member 5, and the bumper beam 12 is coupled to and supported by the side member 5 via the crash box 16.

The bumper reinforcement 13 is disposed above the bumper beam 12 and extends in the vehicle width direction between a pair of headlamps (headlamps) 17. The bumper reinforcement 13 is coupled to the radiator support 7 by bumper brackets 18 and is also coupled to the leg portions 9 of the radiator support 7 by first arm members 19. The bumper brackets 18 in pairs are coupled to a substantially intermediate portion of the bumper reinforcement 13 in the longitudinal direction (vehicle width direction) and is supported by the radiator support 7. The first arm members 19 in pairs are coupled to both ends of the bumper reinforcement 13 and supported by the leg portions 9 of the radiator support 7.

The bumper fascia 14 is a panel member constituting the design of the front portion of the vehicle. An upper end portion 14a of the bumper fascia 14 is covered with an upper surface 13a of the bumper reinforcement 13 and fixed by a clip or the like, and stands up so as to cover the front sides of the bumper beam 12 and the bumper reinforcement 13. A radiator grill 15 is disposed above the standing bumper fascia 14 so as to close a space between the upper end portion 14a of the bumper fascia 14 and a front end portion 4a of the hood 4.

The pedestrian collision detection device 1 is provided in the front bumper 11. The pedestrian collision detection device 1 comprises a sensor member 20 for detecting the shock received by the vehicle C when colliding with a pedestrian. The sensor member 20 comprises a flexible tube 21, a buffer member 22 which covers the tube 21 and is deformed when colliding with a pedestrian to press the tube 21, a pressure sensor 23 which detects a variation in the internal pressure of the tube 21.

The tube 21 is formed of a flexible and elastically deformable material such as resin and extends in the vehicle width direction with a size slightly larger than the vehicle width dimension. The shape of the tube 21 is not particularly limited, but in the present embodiment, for example, the cross section is substantially circular. The inside of the tube 21 is filled with gas (for example, air). The tube 21 is disposed on the front side of the vehicle and is pressed by the buffer member 22 deformed by the shock at the time of collision with a pedestrian and is elastically deformed so as to be crushed. By elastically deforming in this manner, the tube 21 is designed to allow its internal pressure (specifically, increase in the internal pressure) to be varied.

The buffer member 22 is formed of an Energy Absorption (EA) material such as rigid polyurethane foam to have a substantially rectangular cross section. The buffer member 22 extends in accordance with the length of the tube 21 and covers the outer periphery of the tube 21. More specifically, a concave groove 22c is formed in the longitudinal direction (vehicle width direction) of the buffer member 22, on the surface on the vehicle rear side of the buffer member 22, and the tube 21 is accommodated in the groove 22c. In addition, the whole length of the buffer member 22 is slightly shorter than the whole length of the tube 21 and adjusted in size so as to expose the vicinities of both ends of the tube 21 from both ends of the buffer member 22 to the outside. Thus, the tube 21 can be reliably pressed while protecting the tube 21 from being damaged at the time of collision with a pedestrian.

The pressure sensor 23 is attached to an end portion of the tube 21 such that the detection element is contained inside the tube 21. The pressure sensor 23 may be attached to at least one end of the tube 21, but in the present embodiment, one pressure sensor 23 is attached to each of both ends of the tube 21. When the pressure sensor 23 is attached to only one end of the tube 21, the other end of the tube 21 is sealed. The pressure sensor 23 is connected to an Electronic Control Unit (ECU) (not shown) of the vehicle C by a connecting member such as a wire harness. Upon detecting the variation in the internal pressure of the tube 21, the pressure sensor 23 outputs the detection signal to the ECU. Upon receiving such a detection signal, the ECU immediately activates the pedestrian protection device and executes, for example, pop-up of the hood 4, expansion of the hood airbag, and the like.

The sensor member 20 (tube 21, buffer member 22, and pressure sensor 23) is supported on the vehicle body side of the vehicle C by the support member 24. More specifically, the sensor member 20 is supported by the support member 24 so as to be positioned above the bumper beam 12 and behind the bumper beam 12.

By positioning the sensor member 20 in this manner, for example, when an object of about the knee length of a pedestrian, such as a small animal traversing a road or a pole on a road collides substantially with the front side of the vehicle C, not the sensor member 20 but the bumper beam 12 collides with the object and receives the shock at the time of collision. In contrast, the sensor member 20 (concisely, the tube 21 and the buffer member 22) is not substantially in contact with the object, and the shock received by the collision is reduced to each stage. For this reason, the tube 21 can be prevented from receiving shock and being elastically deformed at the time of such a collision.

On the other hand, when the pedestrian collides substantially with the front side of the vehicle C, the pedestrian first collides with the bumper beam 12. After collision with the bumper beam 12, the pedestrian also collides with the sensor member 20 (concisely, buffer member 22 and tube 21) via the bumper fascia 14 since the upper body is inclined toward the rear side of the vehicle. Then, since the buffer member 22 is deformed under the shock caused by a collision of the pedestrian and presses the tube 21, the tube 21 is elastically deformed and the variation in internal pressure occurs.

As a result, when colliding with an object such as a small animal, it is difficult to cause a change in the internal pressure of the tube 21, while at the time of a collision with a pedestrian, a change in internal pressure can be caused in the tube 21. The accuracy of detecting interpersonal collision by the pressure sensor 23 can be therefore improved.

To improve the detection accuracy of interpersonal collision, in the present embodiment, a lower portion 22a of the buffer member 22 is positioned above the upper portion 12a of the bumper beam 12, a front portion 22b of the buffer member 22 is positioned behind the front portion 12b of the bumper beam 12, and the tube 21 covered with the buffer member 22 is disposed at the front portion of the support member 24. FIG. 3 shows as an example a configuration in which the buffer member 22 is positioned above the bumper beam 12 by height h and rearward by distance d, and the tube 21 covered with the buffer member 22 is disposed.

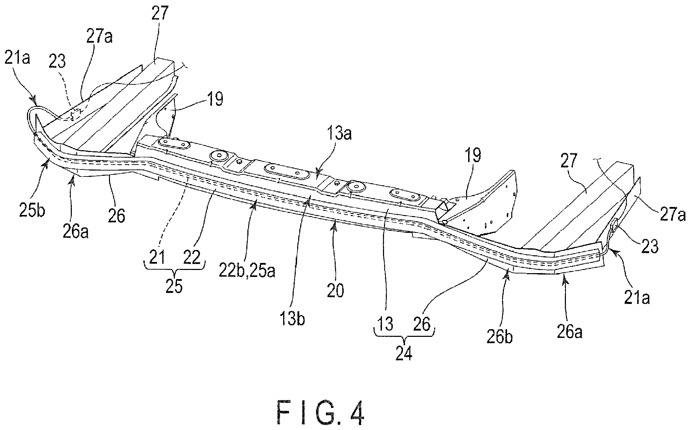

FIG. 4 is a perspective view of the structure of the support member 24 as seen from the upper left front side of the vehicle C. The support member 24 is configured to include a first support member and a second support member. The first support member supports the tube 21 and the buffer member 22 across the pair of headlamps 17. In contrast, the second support member supports the tube 21 and the buffer member 22 on the outer side of the vehicle than both ends of the first support member. When the tube 21 does not need to be specifically distinguished from the buffer member 22, the tubes 21 covered with the buffer member 22 will be collectively referred to as a pressure sensing portion 25 and will be described below.

In the present embodiment, the bumper reinforcement 13 is configured as the first support member. The bumper reinforcement 13 supports the pressure sensing portion 25 across the pair of headlamps 17. The bumper reinforcement 13 is formed in a shape of a substantially rectangular tube having four surfaces, and a surface portion 13b of the surfaces facing the front side of the vehicle is configured as a seat surface for supporting the pressure sensing portion 25. The surface portion 13b of the bumper reinforcement 13 corresponds to the front portion of the support member 24. A pressure sensing portion 25 is fixed to the surface portion 13b of the bumper reinforcement 13. More specifically, the pressure sensing portion 25 is fixed such that the groove 22c of the buffer member 22 faces the surface portion 13b, in a state in which the tube 21 is accommodated in the groove 22c of the buffer member 22. A method of fixing the pressure sensing portion 25 to the surface portion 13b is not particularly limited. For example, adhesion with an adhesive tape or bonding with an adhesive can be employed.

The bumper reinforcement 13 is supported by the radiator support 7 and its leg portions 9 such that the front portion 25a (front portion 22b of the buffer member 22) of the pressure sensing portion 25 fixed to the surface portion 13b is positioned more forward than front portion 17a of the pair of headlamps 17. The tube 21 can be thereby deformed elastically by deforming the buffer member 22 disposed on the surface portion 13b of the bumper reinforcement 13 without being obstructed by the headlamps 17 at the time of collision with a pedestrian.

Both ends of the bumper reinforcement 13 (portion corresponding to the first support member in the present embodiment) extend to the outside of the vehicle. That is, the bumper reinforcement 13 comprises the extension portions 26 at both ends so as to extend the whole length rather than the dimension between the pair of headlamps 17. In the present embodiment, the extension portions 26 of the bumper reinforcement 13 are configured as the second support members. In other words, the second support members of the present embodiment are configured to include the extension portions 26 of the bumper reinforcement 13.

The extension portions 26 extend from both ends of the bumper reinforcement 13 downward (for example, just below) the headlamps 17 toward the outside of the vehicle. The extension portions 26 may extend to the outer side of the vehicle than both ends of the bumper reinforcement 13, and the base point may not be at both ends of the bumper reinforcement 13. For example, the whole length of the bumper reinforcement 13 may be extended by partially overlapping the extension portions 26 and the bumper reinforcement 13 in front of both ends of the bumper reinforcement 13. In the extension portions 26, the front end vicinities 26a are bent along the front corner portions of the vehicle C and slightly wrap toward the rear side of the vehicle. From another viewpoint, the extension portions 26 are disposed on the outer sides of the vehicle than the end portions (left and right end portions) in the vehicle width direction of the hood 4.

The extension portion 26 is formed in a plate shape which is in series with the surface portion 13b of the bumper reinforcement 13, and a surface portion 26b of the extension portion 26 facing the front side of the vehicle is configured as a seat surface for supporting the pressure sensing portion 25. The surface portion 26b of the extension portion 26 corresponds to the front portion of the support member 24. The pressure sensing portion 25 is fixed to the surface portion 26b of the extension portion 26. The fixing method may be the same as the method of fixing to the surface portion 13b of the bumper reinforcement 13, but may be different.

Thus, the pressure sensing portion 25 can be disposed on the front side of the vehicle C along the whole width of the vehicle C, and furthermore, the front end vicinity 25b of the pressure sensing portion 25 can be disposed to wrap from the front corner portion of the vehicle C to the rear side. Therefore, when the vehicle C collides not only with a small animal or the like not on the front side but also with a small animal or the like near the front corner portions, the collision can be prevented from being detected as an interpersonal collision. In addition, when the vehicle C collides not only with a pedestrian on the substantially front side but with a pedestrian at the front corner, the interpersonal collision can be detected certainly.

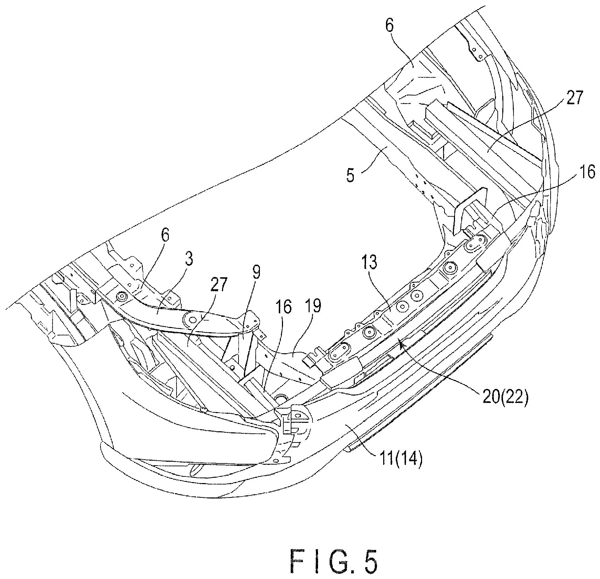

FIG. 5 is a perspective view of the internal structure of the front portion of the vehicle seen from the upper right side of the vehicle C. As shown in FIG. 4 and FIG. 5, the extension portions 26 are coupled to a fender panel 6 by second arm members 27. The second arm member 27 is coupled to a substantially intermediate portion of the extension portion 26 and is supported by the fender panel 6. Thus, the strength of the extension portions 26 is increased, and the deformation of the extension portions 26 is suppressed when the vehicle C collides with the pedestrian. As a result, the shock can be certainly applied to the tube 21 via the buffer member 22 at the time of a collision, and the tube 21 can be deformed elastically and appropriately. In addition, the extension portions 26 are supported by the fender panel 6 such that the front portion 25a (front portion 22b of the buffer member 22) of the pressure sensing portion 25 fixed to the face portions 26b is positioned on a more front side of the vehicle than the front parts 17a of the pair of headlamps 17. Thus, the tube 21 disposed on the surface portions 26b of the extension portions 26 can be elastically deformed without being obstructed by the headlamps 17 when colliding with a pedestrian.

The end vicinities of the tube 21 covered with the buffer member 22 are exposed from the both ends of the buffer member 22 to the outside, and the exposed portion 21a is made to extend along the side surface portions 27a of the second arm members 27. In addition, the pressure sensors 23 are fixed to the side surface portions 27a of the second arm members 27, and attached to the end portions (the tips of the exposed portion 21a) of the tube 21. A method of fixing the pressure sensors 23 is not particularly limited, but any method such as fastening with a bolt can be employed.

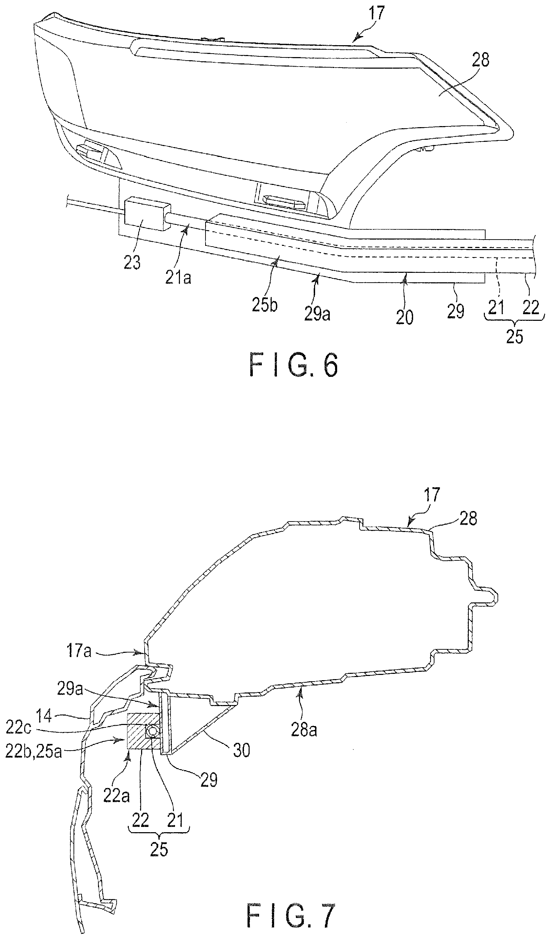

In the above-described first embodiment, the extension portions 26 of the bumper reinforcement 13 are configured as the second support members, but the configuration of the second support members is not limited to this. For example, FIG. 6 and FIG. 7 show an embodiment in which the second support member is provided on the headlamp 17 as a second embodiment. Such a second embodiment will be hereinafter described. In the second embodiment, a basic configuration other than the second support member in the pedestrian collision detection device 1 can be the same as that in the above-described first embodiment. Therefore, the corresponding description of the first embodiment will be considered for the configuration other than the second support member, and its detailed description will be omitted.

FIG. 6 is a perspective view showing a configuration of a headlamp 17 according to the present embodiment, and FIG. 7 is a view of a longitudinal section of the front side of the vehicle showing the support mode of a pressure sensing section 25 as seen from a vehicle width direction. FIG. 6 shows the configuration of the headlamp 17 on the right side of the vehicle C, and the left-side headlamp 17 corresponds to a structure in which the illustrated right headlamp 17 are reversed laterally. For this reason, the only right headlamp 17 of the vehicle C shown in FIG. 6 will be explained below.

The headlamp 17 is configured to comprise a light source such as a bulb, a lens, a reflector, and the like. These members are assembled into a lamp housing 28 to form a unit. The headlamp 17 is disposed to slightly wrap from the vicinities of both ends in the vehicle width direction to the rear side of the vehicle, on the front side of the vehicle. The lamp housing 28 comprises a stay 29 hanging from the front side of a bottom portion 28a. In the present embodiment, the stay 29 of the lamp housing 28 is configured as a second support member. In other words, the second support member of the present embodiment is configured to comprise the stay 29 of the lamp housing 28.

In the stay 29, the front side of the bottom portion 28a (lower portion of the headlamp 17) of the lamp housing 28 extends downward over a predetermined range. The stay 29 is formed in a shape of a flat box having a hollow interior, and a surface portion 29a facing the front side of the vehicle is configured as a seat surface for supporting the pressure sensing portion 25. The surface portion 13b of the stay 29 corresponds to the front portion of the support member. A pressure sensing portion 25 is fixed to the surface portion 29a of the stay 29. For this reason, since a member for fixing (supporting) the pressure sensing portion 25 does not need to be newly provided as a separate component, the number of components does not need to be increased. The method of fixing the pressure sensing portion 25 to the surface portion 29a of the stay 29 may be the same as the method of fixing the pressure sensing portion 25 to the surface portion 13b of the bumper reinforcement 13 (for example, adhesion with an adhesive tape or bonding with an adhesive) but may be different from each other. The length of the stay 29 is not particularly limited as long as it can certainly fix the pressure sensing portion 25. In the present embodiment, the stay 29 is extended along the shape of the bottom portion 28a of the lamp housing 28 with a length for slightly wrapping from the front corner portion of the vehicle C to the rear side. In addition, the stay 29 is discontinuous with the surface portion 13b of the bumper reinforcement 13 but may be continuous.

Therefore, even when the pressure sensing portion 25 is fixed to the surface portion 29a of the stay 29, the pressure sensing portion 25 can be disposed over the whole width of the vehicle on the front side of the vehicle C as in the case where it is fixed to the extension portion 26, and furthermore, a vicinity 25b of a tip of the pressure sensing portion 25 can be arranged to wrap from the front corner portion of the vehicle C to the rear side. Therefore, the detection accuracy of interpersonal collision can be enhanced in a collision of not only the front surface of the vehicle C but also the front corner portion.

The stay 29 is joined to the bottom portion 28a of the lamp housing 28 and reinforced by a lamp bracket 30. Deformation of the stay 29 is thereby suppressed when the vehicle C collides with a pedestrian. As a result, at the time of a collision, the shock can be applied certainly to the tube 21, and the tube 21 can be deformed elastically and appropriately. In addition, the stay 29 hangs from the lamp housing 28 such that the front portion 25a of the pressure sensing portion 25 fixed to the surface portion 29a is positioned on the front side of the vehicle from the front portion 17a of the pair of headlamps 17. The tube 21 disposed on the surface portion 29a of the stay 29 can be thereby elastically deformed without being obstructed by the headlight 17 when colliding with a pedestrian.

Exposed portions 21a at both ends of the tube 21 are made to wrap the surface portion 29a of the stay 29. In addition, the pressure sensor 23 is fixed to the surface portion 29a of the stay 29, and is attached to the end portion (the tip of the exposed portion 21a) of the tube 21. A method of fixing the pressure sensors 23 is not particularly limited, but any method such as fastening with a bolt can be employed.

As described above, according to the pedestrian collision detection device 1 of the first embodiment and the second embodiment, detecting collision with, for example, a small animal other than a human as interpersonal collision can be prevented, and the accuracy of detection of the collision between the vehicle C and a pedestrian can be enhanced. Thus, for example, a pedestrian protection device such as an active hood (pop-up hood) or a hood airbag can be properly operated at the time of the collision between the vehicle and the pedestrian. The speed of the vehicle C at the collision is assumed to be, for example, from 20 km/h to approximately 60 km/h.

Each of the embodiments described above is presented as an example and is not intended to limit the scope of the invention. Indeed, the novel embodiments described herein may be embodied in a variety of other forms; furthermore, various omissions, substitutions and changes in the form of the embodiment described herein may be made without departing from the spirit of the invention. The accompanying claims and their equivalents are intended to cover such forms or modifications as would fall within the scope and spirit of the inventions.

The first embodiment and the second embodiment described above is an embodiment comprising either the extension portion 26 of the bumper reinforcement 13 or the stay 29 of the lamp housing 28 as the second support member. The embodiment may not comprise either in this manner, but may comprise both of the extension portion 26 and the stay 29. For example, the extension 26 and the stay 29 may be arranged side by side in the longitudinal direction of the vehicle C, and the front member (for example, the stay 29) may be reinforced by the rear member (extension portion 26). In addition, the extension portion 26 and the stay 29 may be formed such that their surface portions 26b and 29a are continuous.

### Reference Signs List

1... pedestrian collision detection device, 5... side member, 7... radiator support, 9... leg portion of radiator support, 11... front bumper, 12... bumper beam, 12a... upper portion of bumper beam, 12b... front portion of bumper beam, 13... bumper reinforcement, 13a... upper surface of bumper reinforcement, 13b... surface portion of bumper reinforcement, 14... bumper fascia, 17... headlamp, 17a... front portion of headlamp, 19... first arm member, 20... sensor member, 21... tube, 22.... buffer member, 22a... lower portion of buffer member, 22b... front portion of buffer member, 22c... groove of buffer member, 23... pressure sensor, 24... support member, 26... extension portion, 26b... surface portion of extension portion, 27... second arm member, 27a... side surface portion of second arm member, 28... lamp housing, 29... stay, 29a... surface portion of stay, C... vehicle.

## Claims

1. A pedestrian collision detection device of a vehicle comprising a front bumper on a front side, the device comprising:
a sensor member detecting shock received by the vehicle at collision with a pedestrian; and
a support member supporting the sensor member on a vehicle body side of the vehicle,
**characterized in that**
the front bumper comprises a bumper beam arranged between a pair of side members, and
the sensor member is positioned above the bumper beam and behind the bumper beam and is supported by the support member.

2. The pedestrian collision detection device of Claim 1, **characterized in that**
the sensor member comprises a tube having a flexibility and extending in a vehicle width direction, a buffer member covering the tube and extending in the vehicle width direction, and deformed at the collision to press the tube, and a pressure sensor detecting variation in an internal pressure of the tube,
the support member is provided to extend in the vehicle width direction, and
the tube covered with the buffer member is disposed on a front portion of the support member such that a lower portion of the buffer member is positioned above an upper portion of the bumper beam and a front portion of the buffer member is located behind a front portion of the bumper beam.

3. The pedestrian collision detection device of Claim 2, **characterized in that**
the support member is configured to include a first support member supporting the tube between a pair of headlamps and a second support member supporting the tube on an outer side of the vehicle than both ends of the first support member.

4. The pedestrian collision detection device of Claim 3, **characterized in that**
the first support member is a bumper reinforcement which supports the front bumper on the vehicle body side of the vehicle.

5. The pedestrian collision detection device of Claim 4, **characterized in that**
the second support member includes an extension portion of the bumper reinforcement extending to the outer side of the vehicle than both ends of the bumper reinforcement.

6. The pedestrian collision detection device of Claim 3, **characterized in that**
the second support member includes a stay of the headlamp provided under each of the pair of headlamps.

7. The pedestrian collision detection device of Claim 4, **characterized in that**
the second support member includes a stay of the headlamp provided under each of the pair of headlamps.

8. The pedestrian collision detection device of Claim 5, **characterized in that**
the second support member includes a stay of the headlamp provided under each of the pair of headlamps.

9. The pedestrian collision detection device of Claim 2, **characterized in that**
the pressure sensor is disposed on at least one of ends of the tube.

10. The pedestrian collision detection device of Claim 3, **characterized in that**
the pressure sensor is disposed on at least one of ends of the tube.

11. The pedestrian collision detection device of Claim 4, **characterized in that**
the pressure sensor is disposed on at least one of ends of the tube.

12. The pedestrian collision detection device of Claim 5, **characterized in that**
the pressure sensor is disposed on at least one of ends of the tube.

13. The pedestrian collision detection device of Claim 6, **characterized in that**
the pressure sensor is disposed on at least one of ends of the tube.

14. The pedestrian collision detection device of Claim 7, **characterized in that**
the pressure sensor is disposed on at least one of ends of the tube.

15. The pedestrian collision detection device of Claim 8, **characterized in that**
the pressure sensor is disposed on at least one of ends of the tube.

## Amended claims

### Amended claims under Art. 19.1 PCT

**1.** (Amended) A pedestrian collision detection device of a vehicle comprising a front bumper on a front side, the device comprising:
a sensor member detecting shock received by the vehicle at collision with a pedestrian; and
a support member supporting the sensor member on a vehicle body side of the vehicle,
**characterized in that**
the front bumper comprises a bumper beam arranged between a pair of side members, and a bumper reinforcement arranged above the bumper beam to support the front bumper on the vehicle body side of the vehicle,
the sensor member is positioned above the bumper beam and behind the bumper beam and is supported by the support member, and
the support member is configured to include the bumper reinforcement.

**2.** The pedestrian collision detection device of Claim 1, **characterized in that**
the sensor member comprises a tube having a flexibility and extending in a vehicle width direction, a buffer member covering the tube and extending in the vehicle width direction, and deformed at the collision to press the tube, and a pressure sensor detecting variation in an internal pressure of the tube,
the support member is provided to extend in the vehicle width direction, and
the tube covered with the buffer member is arranged on a front portion of the support member such that a lower portion of the buffer member is positioned above an upper portion of the bumper beam and a front portion of the buffer member is located behind a front portion of the bumper beam.

**3.** (Amended) The pedestrian collision detection device of Claim 2, **characterized in that**
the support member is configured to include the bumper reinforcement supporting the tube between a pair of headlamps, and extension portions of the bumper reinforcement extending to outer sides of the vehicle than both ends of the bumper reinforcement and supporting the tube on the outer sides of the vehicle than both the ends of the bumper reinforcement, respectively.

**4.** (Amended) The pedestrian collision detection device of Claim 2, **characterized in that**
the support member is configured to include the bumper reinforcement supporting the tube between a pair of headlamps, and stays of the headlamps supporting the tube on the outer sides of the vehicle than both the ends of the bumper reinforcement, respectively.

**5.** (Amended) The pedestrian collision detection device of Claim 3, **characterized in that**
the support member is configured to include stays of the headlamps supporting the tube on the outer sides of the vehicle than both the ends of the bumper reinforcement, respectively, and provided on lower portions of the pair of headlamps, respectively.

**6.** (Amended) The pedestrian collision detection device of Claim 2, **characterized in that**
the pressure sensor is arranged on at least one of ends of the tube.

**7.** (Amended) The pedestrian collision detection device of Claim 3, **characterized in that**
the pressure sensor is arranged on at least one of ends of the tube.

**8.** (Amended) The pedestrian collision detection device of Claim 4, **characterized in that**
the pressure sensor is arranged on at least one of ends of the tube.

**9.** (Amended) The pedestrian collision detection device of Claim 5, **characterized in that**
the pressure sensor is arranged on at least one of ends of the tube.

**10.** Deleted)

**11.** Deleted)

**12.** Deleted)

**13.** Deleted)

**14.** Deleted)

**15.** Deleted)

Statement under Art. 19.1 PCT
The applicant, who has received the International Search Report relating to the above-identified international application transmitted on May 30, 2017, hereby files amendment pursuant to Art.19 and Rule 46.1 PCT as in the attached sheets.

Claims 1 and 3 through 9 are amended, and claims 10 through 15 are cancelled, while the remaining claim 2 is retained unchanged.

The amendment to claim 1 is supported by the matters described in claim 4 as filed, the paragraphs [0023], [0035] of the description as filed, and Fig. 3 of the drawings as filed.

The amendment to claim 3 is supported by the matters described in claim 5 as filed, the paragraph [0037] of the description as filed, and Figs. 2 and 4 of the drawings as filed.

The amendment to claim 4 is supported by the matters described in claim 7 as filed, the paragraphs [0045], [0046] of the description as filed, and Fig. 6 of the drawings as filed.

Claim 5 is amended based on the amended claim 3 and the claim 8 as filed.

Claim 6 corresponds to the claim 9 as filed.

Claim 7 corresponds to the claim 10 as filed.

Claim 8 corresponds to the claim 14 as filed.

Claim 9 corresponds to the claim 15 as filed.

We believe the amendment does not go beyond the disclosure in the original international application.

Enclosures: as noted above
 Replacement Pages 15, 16 and 17 are enclosed herewith.
